# EUROPEAN PATENT APPLICATION

(11) **EP 4 773 671 A1**
(43) Date of publication of application: **08.07.2026**
(21) Application number: 24876042.3
(22) Date of filing: 30.05.2024
(51) Int. Cl.: H04W 36/00

(54) **SERVICE NODE SELECTION METHODS AND SERVICE NODE SELECTION DEVICE, AND STORAGE MEDIUM**

(30) Priority: 08.10.2023 CN 202311305922
(71) Applicant: ZTE Corporation, Shenzhen, Guangdong 518057 (CN)
(72) Inventor: LIU, Xing, Shenzhen, Guangdong 518057 (CN); HAN, Xianghui, Shenzhen, Guangdong 518057 (CN); ZHANG, Junfeng, Shenzhen, Guangdong 518057 (CN); GOU, Wei, Shenzhen, Guangdong 518057 (CN); LI, Jian, Shenzhen, Guangdong 518057 (CN)
(74) Representative: Aipex B.V.
(86) International application number: PCT/CN2024/096431
(87) International publication number: WO 2025/077216

(57) **Abstract**

Provided are service node selection methods and devices and a storage medium. A service node selection method includes: selecting (S210), by a terminal, N synchronization signal/physical broadcast channel blocks (SSBs) based on the measurement of SSBs, where N is a natural number greater than or equal to 1; and transmitting (S220), by the terminal and based on the selected N SSBs, PRACHs within multiple random access channel occasions (ROs) corresponding to the N SSBs.

## Description

### TECHNICAL FIELD

The present application relates to the field of wireless communications and, in particular, to service node selection methods and devices and a storage medium.

### BACKGROUND

A cell splitting technology in cellular networks is currently regarded as an effective approach to increase wireless system capacity. However, with the deployment of various low-power network nodes, such as microcells, small cells, home base stations, and relay nodes, within conventional cellular networks, the cellular networks are becoming increasingly heterogeneous and dense. This trend leads to problems such as severe inter-cell interference and frequent handovers of user equipments (UEs) during mobility, thereby degrading system capacity and user experience. Moreover, in dense networking of conventional cellular cells, system capacity is interference-limited; as the cell radius decreases, the system capacity exhibits a noticeable inflection point.

To address the preceding problems, a cell-free system has been proposed, in which multiple access points (APs), each equipped with one or more antennas, are distributed over a large region. Data is transmitted to a central processing unit (CPU) via a fronthaul link, and multiple UEs are served using the same time-frequency resources. In the system, each UE in the connected state has a UE-centric cell, and this cell moves along with the UE during mobility, thereby minimizing the impact of the inter-cell interference and frequent handovers on the UE. However, in the cell-free system, it is typically assumed that the UE operates in a cell-free mode only after a radio resource control (RRC) connection has been established. Prior to that, the UE is required to first establish an RRC connection with a cell in a cellular network in the form of a cellular network and then switch from the cellular network to the cell-free system.

Nevertheless, the cellular system and the cell-free system are designed based on two fundamentally different design concepts: the former is base-station-centric while the latter is UE-centric. Simply combining these two systems with the different design concepts means that, during UE access, problems such as the severe inter-cell interference and frequent cell selection/reselection remain. Therefore, a key problem to be solved is how to enter a "cell-free" network mode already at the initial access stage, that is, how to enable a UE to establish links with multiple serve nodes in the initial access stage.

### SUMMARY

In view of this, embodiments of the present application are expected to provide service node selection methods and devices and a storage medium.

In a first aspect, an embodiment of the present application provides a service node selection method. The method includes the following.

A terminal selects N synchronization signal/physical broadcast channel blocks (SSBs) based on a measurement of SSBs, where N is a natural number greater than or equal to 1.

The terminal transmits, based on the selected N SSBs, physical random access channels (PRACHs) within multiple corresponding RACH occasions (ROs) corresponding to the N SSBs.

In a second aspect, an embodiment of the present application provides a service node selection method. The method includes the following.

A network side receives PRACHs transmitted by a terminal within N ROs.

The network side determines a service node set of the terminal according to service nodes corresponding to ROs in which PRACHs are received.

In a third aspect, an embodiment of the present application provides a service node selection apparatus. The apparatus is configured at a terminal and includes the following.

A measurement module is configured to select N SSBs based on a measurement of SSBs, where N is a natural number greater than or equal to 1.

A transmission module is configured to transmit, based on the selected N SSBs, PRACHs within multiple ROs.

In a fourth aspect, an embodiment of the present application provides a service node selection apparatus. The apparatus is configured on a network side and includes the following.

A receiving module is configured to receive PRACHs transmitted by a terminal within N ROs.

A processing module is configured to determine a service node set of the terminal according to service nodes corresponding to ROs in which PRACHs are received.

In a fifth aspect, an embodiment of the present application provides a service node selection device. The device includes the following.

A memory is configured to store a program.

A processor is configured to execute the program which, when executed by the processor, causes the processor to perform the service node selection method according to any implementation of the first aspect.

In a sixth aspect, an embodiment of the present application provides a service node selection device. The device includes the following.

A memory is configured to store a program.

A processor is configured to execute the program which, when executed by the processor, causes the processor to perform the service node selection method according to any implementation of the second aspect.

In a seventh aspect, an embodiment of the present application provides a non-transitory storage medium including a stored program which, when executed, causes the service node selection method according to any implementation of the first aspect or any implementation of the second aspect to be performed.

### BRIEF DESCRIPTION OF DRAWINGS

FIG. 1 is a diagram illustrating an initial random access in a 5th generation (5G) system.
FIG. 2 is a flowchart of a service node selection method according to an embodiment of the present application.
FIG. 3 is a network diagram illustrating a service node selection method according to embodiment one of the present application.
FIG. 4 is a diagram illustrating RO selection in a service node selection method according to embodiment one of the present application.
FIG. 5 is a network diagram illustrating a service node selection method according to embodiment two of the present application.
FIG. 6 is a diagram illustrating RO selection in a service node selection method according to embodiment two of the present application.
FIG. 7 is another diagram illustrating RO selection in a service node selection method according to embodiment two of the present application.
FIG. 8 is a network diagram illustrating a service node selection method according to embodiment three of the present application.
FIG. 9 is a diagram illustrating RO selection in a service node selection method according to embodiment three of the present application.
FIG. 10 is another flowchart of a service node selection method according to an embodiment of the present application.
FIG. 11 is a network diagram illustrating a service node selection method according to embodiment four of the present application.
FIG. 12 is a diagram illustrating the structure of a service node selection apparatus according to an embodiment of the present application.
FIG. 13 is a diagram illustrating the structure of a service node selection apparatus according to an embodiment of the present application.
FIG. 14 is a diagram illustrating the structure of a service node selection device according to an embodiment of the present application.
FIG. 15 is a diagram illustrating the structure of a service node selection device according to an embodiment of the present application.

### DETAILED DESCRIPTION

To make the objects, technical solutions, and beneficial effects of the present application more apparent, the embodiments of the present application are described below in conjunction with the drawings. It is to be noted that if not in collision, the embodiments of the present application and the features thereof may be combined with each other.

A 5th generation (5G) mobile communication cellular system supports a very broad spectrum range, spanning from several hundred megahertz (MHz) to tens of gigahertz (GHz), all of which serve as operational frequency bands for the 5G system. Based on this, a novel initial access solution is defined. One key step is a physical random access channel (PRACH) that may also be referred to as mag.1. The solution includes different PRACH formats, PRACH resource configurations, the association relationships between synchronization signal/physical broadcast channel blocks (SSBs) and PRACH transmission resources, PRACH retransmission mechanisms, PRACH power control mechanisms, and others.

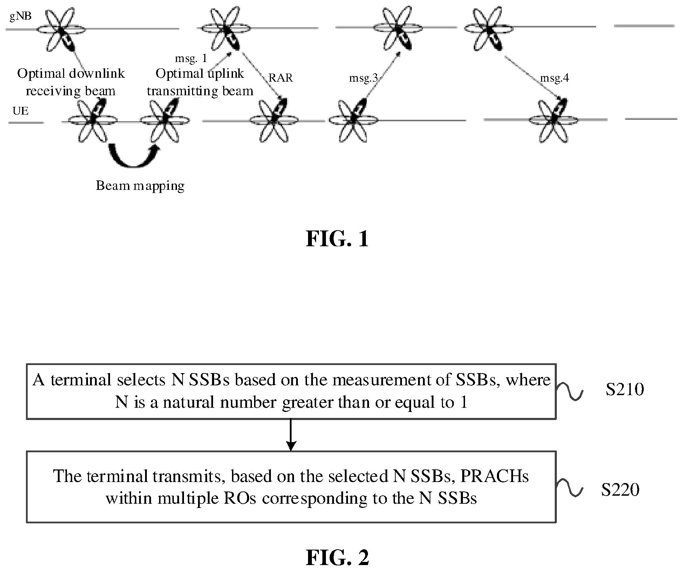

FIG. 1 is a diagram illustrating an initial random access in a 5G system. As shown in FIG. 1, a UE transmits a preamble sequence in a random access channel (RACH) occasion (RO) according to a PRACH transmission configuration and an SSB selected by the UE. In this step, if transmit-receive (Tx-Rx) reciprocity on the UE side can be ensured, a fixed mapping exists between a receiving beam (Rx beam) of the UE and a transmitting beam (Tx beam) of the UE. Subsequently, a unique Tx beam can be determined based on reception of the SSB by the UE. Specifically, the UE may attempt to receive SSBs from a next generation NodeB (gNB) using different Rx beams and determine an optimal or suitable Rx beam (for example, an Rx beam having the highest reference signal received power (RSRP) or an RSRP value higher than a predefined threshold). Then, a corresponding Tx beam is determined according to the optimal or suitable Rx beam. An RO for transmitting a PRACH is determined according to a relationship between the SSB and the RO. Based on this relationship, the gNB can determine the SSB selected by the UE. Further, the gNB can transmit a subsequent downlink (DL) transmission using the same beam as that used to transmit the SSB, including msg.2 (also referred to as a random access response (RAR)) and msg.4 (which is a physical downlink shared channel (PDSCH) carrying a contention resolution identifier of the UE). According to the current random access channel (RACH) process, an RAR should be transmitted in response to receiving a PRACH transmission. More specifically, the UE should monitor an RAR physical downlink control channel (PDCCH) within an RAR window, where the RAR window starts from a first symbol of the earliest control resource set (CORESET) in which the UE is configured to receive PDCCHs for a Type1-PDCCH common search space (CSS) set, after the last symbol of an RACH occasion corresponding to the PRACH transmission.

On the other hand, if the Tx-Rx reciprocity on the UE side cannot be ensured, the UE needs to attempt different Tx beams to transmit a PRACH. Subsequently, according to the current RACH process, the only manner for the UE to find a suitable transmitting beam is to perform RACH retransmissions using different beams after the previous RACH transmission failures, which is inefficient.

In either of the preceding cases, the UE transmits the PRACH to the selected SSB only. Based on a pre-established association relationship between the SSB and PRACH transmission resources (ROs) or RO groups, a network node transmitting the SSB receives, on specific time-frequency resources (the ROs or RO groups), the PRACH transmitted by the UE and then performs a subsequent RACH process with the UE.

However, in the preceding RACH process, interaction between the UE and multiple network nodes is not supported, that is, the UE cannot establish connections with the multiple network nodes in the random access stage.

FIG. 2 is a flowchart of a service node selection method according to an embodiment of the present application. As shown in FIG. 2, the service node selection method provided in this embodiment includes the following.

In S210, a terminal selects N SSBs based on the measurement of SSBs, where N is a natural number greater than or equal to 1.

The service node selection method provided in this embodiment is used, in a process in which the terminal has not yet accessed a network, to select multiple service nodes based on the measurement of reference signals to complete a random access process, that is, enabling the terminal to access a cell-free network in the access process. The service nodes selected by the terminal may be APs or other service nodes capable of providing terminal access, and the embodiments of the present application are illustrated using an example in which the APs are used as the service nodes.

Through different antenna configurations and radio-frequency transceiving configurations, different terminals have different signal transceiving capabilities. For a terminal that has not yet accessed a network, the terminal may receive SSBs transmitted by neighboring service nodes through receiving spatial hypotheses, where a receiving spatial hypothesis may also be referred to as a receiving beam, that is, a spatial range in which the terminal receives signals. In the cell-free network, multiple APs are distributed around the terminal, and these APs are network service nodes each configured with one or more antennas. These APs transmit downlink synchronization signals (such as SSBs) according to preconfigured resources. The SSBs transmitted by the service nodes are broadcast signals, and SSBs transmitted by service nodes within a receiving spatial hypothesis range of the terminal can be received by the terminal. In some examples, one AP transmits one SSB, and in some other examples, one AP may transmit multiple SSBs. The terminal then measures the SSBs and selects the N SSBs from the SSBs according to a preset strategy, where N is a natural number greater than or equal to 1. The strategies for the terminal to measure and select the SSBs include, for example, measuring and determining RSRPs of the SSBs, selecting N SSBs with RSRPs greater than a preset threshold, or in the case where a value of N is predetermined, selecting N SSBs in descending order of RSRPs. Since the selected N SSBs are used for the terminal to select service nodes to complete access, the N SSBs may be selected according to principles that facilitate service node selection and access completion by the terminal. The preceding RSRP-based selection manner is only an optional manner and is not limited in the embodiment of the present application. The SSB selection strategy of the terminal may be preset in the terminal or may be determined based on an indication from the network side. Before the terminal performs SSB selection, the network side may transmit the SSB selection strategy to the terminal through higher-layer signaling. For example, the network side may indicate the value of N or indicate an SSB filtering criterion through the higher-layer signaling.

In S220, the terminal transmits PRACHs within multiple corresponding ROs based on the selected N SSBs.

After selecting the N SSBs, the terminal determines the corresponding ROs based on the SSBs and transmits the PRACHs in the respective ROs. A correspondence relationship exists between the SSBs and the ROs and may be preconfigured in the terminal. The terminal is required to select the ROs that are more advantageous for accessing service nodes so that the PRACHs transmitted through these ROs are more likely to be received by service nodes that transmit the SSBs or are more advantageous for the terminal to access multiple service nodes simultaneously. A strategy by which the terminal determines the ROs for transmitting the PRACHs based on the N SSBs is described in detail in the following embodiments.

After the terminal transmits the PRACHs within the multiple ROs, multiple service nodes receive the PRACHs transmitted by the terminal. The service nodes that receive the PRACHs are potentially able to continue a random access procedure with the terminal so that the terminal can establish connections with the multiple service nodes in the initial access stage, thereby enabling the terminal to directly access the cell-free network in the access process. Since the ROs are selected based on the SSBs, and the SSBs are received by the terminal from the multiple service nodes, the ROs determined by the terminal for transmitting the PRACHs have a correspondence relationship with the service nodes that transmit the SSBs. Therefore, determining the ROs by the terminal for transmitting the PRACHs actually determines the service nodes the terminal accesses.

In an embodiment, before selecting the N SSBs based on the measurement of the SSBs, the terminal further receives M SSBs through L receiving spatial hypotheses, where L is a natural number greater than or equal to 1, and M is a natural number greater than or equal to N. When receiving the SSBs, the terminal receives the SSBs through one or more receiving spatial hypotheses, and the number of received SSBs is M, where M is a natural number greater than or equal to N. The terminal then selects the N SSBs from the M SSBs based on the measurement of the M SSBs. The terminal may receive the SSBs transmitted by the service nodes through one receiving spatial hypothesis (also referred to as a receiving beam). In this case, the terminal operates in an omnidirectional receiving mode and can omnidirectionally receive SSBs transmitted by all service nodes that satisfy the receiving sensitivity of the terminal. The terminal may further receive the M SSBs transmitted by service nodes through multiple receiving spatial hypotheses. Each receiving spatial hypothesis has a certain coverage range and can receive one or more SSBs so that the M SSBs are received collectively through the multiple receiving spatial hypotheses. The M SSBs received by the terminal have different signal qualities. A PRACH transmitted within an RO corresponding to an SSB with a higher signal quality accordingly has a higher signal quality. Therefore, the terminal measures the M SSBs and selects the N SSBs with better signal qualities. Therefore, the terminal can transmit the PRACHs within the ROs corresponding to the N SSBs, thereby facilitating the establishment of multiple connections between the terminal and the service nodes that receive the PRACHs.

In an embodiment, the terminal first determines K receiving spatial hypotheses corresponding to the N SSBs based on the selected N SSBs. Since the terminal receives the M SSBs through the L receiving spatial hypotheses and selects the N SSBs from the M SSBs, the N SSBs are received through some or all of the L receiving spatial hypotheses. Therefore, the K receiving spatial hypotheses corresponding to the selected N SSBs can be determined, that is, receiving spatial hypotheses through which the N SSBs are received, where K is a natural number greater than or equal to 1 and less than or equal to L. After the K receiving spatial hypotheses are determined, P transmitting spatial filters (also referred to as transmitting beams) corresponding to the K receiving spatial hypotheses are further determined. There is a correspondence relationship between the receiving spatial hypotheses of the terminal and the transmitting spatial filters of the terminal, which indicates that the coverage of each receiving spatial hypothesis is the same as or overlaps the coverage of a respective transmitting spatial filter. P is a natural number greater than or equal to 1, that is, at least one transmitting spatial filter is determined. The P transmitting spatial filters are used for transmitting the PRACHs. The terminal transmits the PRACHs within the multiple ROs corresponding to the N SSBs using the P transmitting spatial filters, respectively. Each SSB has one or more respective ROs, and each RO has a respective transmitting spatial filter.

In the service node selection method provided in the embodiment of the present application, after selecting the N SSBs based on the measurement of the SSBs, the terminal transmits the PRACHs within the multiple corresponding ROs based on the selected N SSBs. This can achieve the random access process in which the terminal establishes the connections with the multiple service nodes in the initial access stage, thereby forming a service node set centered on the terminal and improving the performance of the terminal in the initial access stage.

It is to be noted that the embodiment of the present application is illustrated using an example in which the terminal measures and selects SSBs. However, in the service node selection method provided in the embodiment of the present application, the terminal can measure and select any type of broadcast signals transmitted by the service nodes, such as synchronization signals or reference signals, to complete the service node selection.

The terminal may receive the M SSBs using the same receiving spatial hypothesis or through multiple receiving spatial hypotheses. Specific examples are provided below to describe in detail the method in which the terminal determines the service nodes when receiving the SSBs through different receiving spatial hypotheses.

### Embodiment one

In this embodiment, the terminal receives the M SSBs using the same receiving spatial hypothesis, that is, in the omnidirectional receiving mode. The receiving spatial hypothesis is referred to as a receiving beam. The terminal then transmits the PRACHs within one or more corresponding ROs using a transmitting spatial filter (a transmitting beam) corresponding to the receiving beam, that is, omnidirectional transmission.

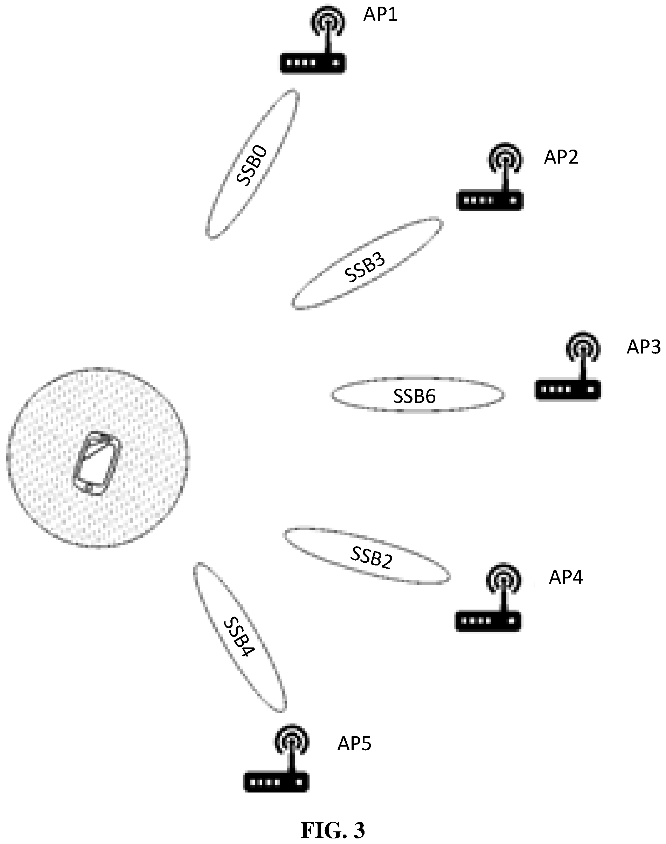

As shown in FIG. 3, FIG. 3 is a network diagram illustrating a service node selection method according to embodiment one of the present application. The terminal and five candidate APs, that is, AP1 to AP5, serving as service nodes, are included in FIG. 3. In the cell-free network, the multiple APs are distributed around the terminal, and these APs are the network service nodes each configured with the one or more antennas. These APs transmit the downlink synchronization signals (such as the SSBs shown in the figure) according to the preconfigured resources. Each AP transmits one SSB, multiple APs may jointly transmit one SSB, or one AP may transmit multiple SSBs. FIG. 3 is shown using an example in which each AP transmits the one SSB. AP1 transmits SSB0, AP2 transmits SSB3, AP3 transmits SSB6, AP4 transmits SSB2, and AP5 transmits SSB4.

The terminal receives the M SSBs transmitted by these APs and selects the N SSBs from the M SSBs. The terminal may select the N SSBs from the received M SSBs, where the N SSBs are either N SSBs with the highest RSRP among the M SSBs or N SSBs with RSRPs higher than a preset threshold among the M SSBs. For example, after the terminal receives the five SSBs transmitted by these APs, based on the measurement of the SSBs by the terminal, a result of the RSRPs of the measured SSBs are sorted in descending order as follows: SSB3, SSB2, SSB4, SSB6, and SSB0. Assuming that the predefined value of N is 3, SSB3, SSB2, and SSB4 are selected candidate SSBs. Accordingly, APs that transmit these SSBs (that is, AP2, AP4, and AP5) serve as candidate service nodes for the terminal.

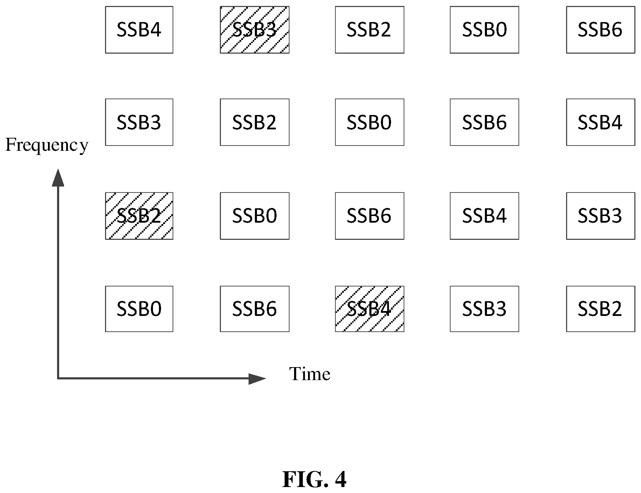

The terminal transmits the PRACHs within the ROs corresponding to the selected SSBs. FIG. 4 is a diagram illustrating RO selection in a service node selection method according to embodiment one of the present application. As shown in FIG. 4, the SSBs actually received by the terminal (such as SSB0, SSB2, SSB3, SSB4, and SSB6 in FIG. 3) are cyclically associated with the ROs in the order of frequency domain followed by time domain. In FIG. 4, the horizontal axis represents the time domain, with time increasing from left to right, and the vertical axis represents the frequency domain, with frequency increasing from bottom to top. SSBx in each block in the figure represents an RO corresponding to the received SSBx. Thus, when the terminal selects SSB3, SSB2, and SSB4 as the candidate SSBs, the terminal selects one RO associated with each of SSB3, SSB2, and SSB4 for transmitting the PRACHs. Since the terminal transmits the PRACHs through one transmitting spatial filter, in order for different service nodes that receive the PRACHs to determine that the PRACHs are transmitted through the same transmitting spatial filter, the terminal transmits the same preamble sequence within the multiple ROs. That is, the terminal transmits the same preamble sequence within determined three ROs. In FIG. 4, blocks filled with diagonal lines represent the selected ROs.

In an embodiment, when more than one RO corresponding to any SSB of the N SSBs exists within the same time-domain resource, the terminal selects an RO, which corresponds to the any SSB of the N SSBs and has the lowest or highest frequency-domain index, within the same time-domain resource to transmit the PRACHs; or the terminal selects an RO corresponding to an SSB with the smallest index among SSBs corresponding to the multiple ROs to transmit the PRACHs; or the terminal selects any RO to transmit the PRACHs. That is, when RO resources corresponding to the selected N SSBs exist within the same time-domain resource, the terminal selects only one RO for transmission. In other words, the terminal does not transmit the multiple PRACHs using frequency-division multiplexing (FDM). In FIG. 4, the multiple ROs corresponding to the selected SSBs (that is, the three ROs corresponding to SSB2, SSB3, and SSB4) exist within a first time-domain resource. The terminal determines one of these ROs for transmitting the PRACHs according to a predefined rule. The predefined rule may be that, within the same time-domain resource, among the ROs corresponding to the selected SSBs, the RO with the lowest or highest frequency-domain index is selected; that is, the RO occupying the lowest or highest frequency resource is selected. Alternatively, the RO corresponding to the SSB with the smallest index among the SSBs corresponding to the ROs may be selected. Therefore, as shown in FIG. 4, an RO corresponding to SSB2 is determined as an RO resource for transmitting the PRACHs. Further, an RO corresponding to another selected SSB is selected. Within a second time-domain resource, there exists one RO corresponding to the remaining selected SSB, that is, an RO corresponding to SSB3. This RO is selected as a second RO resource for transmitting the PRACHs. This process is repeated until a corresponding RO is found for each of all the selected SSBs. That is, within a third time-domain resource, an RO corresponding to SSB4 is selected.

In an embodiment, the selected multiple ROs occupy the same frequency resource. In this case, after a first RO (that is, an RO corresponding to SSB2 within the first time-domain resource) is selected, ROs corresponding to the remaining selected SSBs are selected on the same frequency-domain resource within subsequent time-domain resources. Accordingly, the RO corresponding to SSB4 within a fourth time-domain resource and the RO corresponding to SSB3 within a fifth time-domain resource are selected.

In some examples, after the network side receives the PRACHs transmitted by the terminal, APs corresponding to ROs in which the same preamble sequence is received are used as a group of APs serving the terminal. In some examples, after the network side receives the PRACHs transmitted by the terminal, a subset of the group of APs is determined, based on a measurement result of the received preamble sequence, as the group of APs serving the terminal. For example, if the qualities of the preamble sequence received at AP2 and AP4 satisfy a service threshold, AP2 and AP4 are selected as final service nodes. In some examples, an uplink service node set and a downlink service node set may be different. For example, a set of transmitting APs corresponding to the SSBs selected by the terminal based on the measurement of the SSB is defined as the downlink service node set; after receiving the PRACHs transmitted by the terminal, the network side determines another set of APs as the uplink service node set based on the measurement result of the received preamble sequence.

This embodiment describes a method for determining a group of network service nodes based on uplink and downlink measurements. As a result, the terminal can establish links with the multiple network nodes in the initial access stage, thereby forming the network service node set centered on the terminal. Further, the performance of the terminal in the initial access process can be improved.

### Embodiment two

In this embodiment, the terminal receives the M SSBs using the different receiving spatial hypotheses. The receiving spatial hypotheses are referred to as receiving beams. The terminal then transmits the PRACHs within one or more corresponding ROs using transmitting spatial filters (transmitting beams) corresponding to the receiving beams.

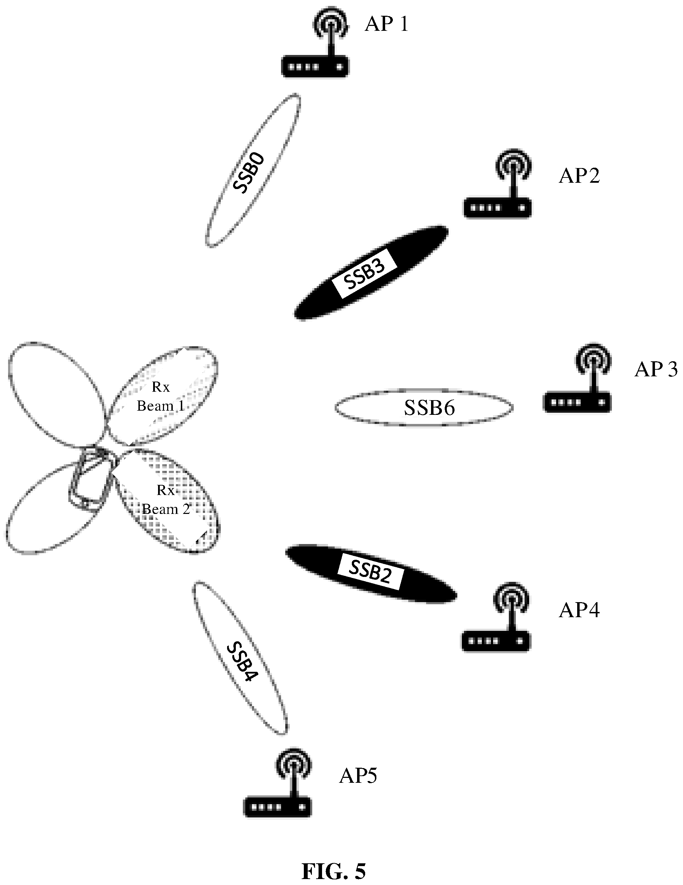

As shown in FIG. 5, FIG. 5 is a network diagram illustrating a service node selection method according to embodiment two of the present application. The terminal and five candidate APs, that is, AP1 to AP5, serving as service nodes, are included in FIG. 5. In the cell-free network, the multiple APs are distributed around the terminal, and these APs are the network service nodes each configured with the one or more antennas. These APs transmit the downlink synchronization signals (such as the SSBs shown in the figure) according to the preconfigured resources. Each AP transmits one SSB, multiple APs may jointly transmit one SSB, or one AP may transmit multiple SSBs. FIG. 5 is shown using an example in which each AP transmits the one SSB. AP1 transmits SSB0, AP2 transmits SSB3, AP3 transmits SSB6, AP4 transmits SSB2, and AP5 transmits SSB4. The terminal receives the SSBs transmitted by the service nodes using the different receiving beams (that is, Rx beam1, Rx beam2, Rx beam3, and Rx beam4 in FIG. 5) and selects the N SSBs from the SSBs. In this case, N transceiving beam pairs are actually selected. The terminal receives the M SSBs through the different receiving spatial hypotheses, where each receiving spatial hypothesis receives at least one SSB.

In an embodiment, the terminal selects N receiving spatial hypothesis-transmitting spatial filter pairs, where each receiving spatial hypothesis-transmitting spatial filter pair includes one SSB and a receiving spatial hypothesis corresponding to the SSB, and SSBs in the N receiving spatial hypothesis-transmitting spatial filter pairs are N SSBs with the highest RSRP among the M SSBs or are N SSBs whose RSRPs are higher than a preset threshold among the M SSBs. For example, based on the measurement of the SSBs by the terminal, N transceiving beam pairs with the highest RSRP or whose RSRPs are above an RSRP threshold are selected as candidate SSBs. As shown in Table 1, the transceiving beam pairs are listed in descending order according to a measurement result. Assuming that N = 4 transceiving beam pairs are selected, that is, beam pairs 1 to 4 in the table, the selected SSBs are SSB3, SSB4, SSB0, and SSB2.

**Table 1**

| Sorting of Transceiving Beam Pairs in Descending Order According to a Measurement Result | Receiving Beam | SSB Serial Number |
|---|---|---|
| 1 | Rx beam1 | SSB3 |
| 2 | Rx beam2 | SSB4 |
| 3 | Rx beam1 | SSB0 |
| 4 | Rx beam2 | SSB2 |
| 5 | Rx beam1 | SSB6 |
| 6 | Rx beam2 | SSB6 |
| 7 | ... | ... |

In some embodiments, among the N receiving spatial hypothesis-transmitting spatial filter pairs, for SSBs having the same index, a receiving spatial hypothesis-transmitting spatial filter pair corresponding to an SSB with a lower RSRP is ignored. Among the N SSBs selected through optimal transceiving beam pairs, there may be the SSBs having the same index. For example, if six transceiving beam pairs are selected, SSB6 is selected repeatedly, that is, {Rx beam1, SSB6} and {Rx beam2, SSB6} correspond to the same SSB. In this case, a transceiving beam pair with a lower RSRP may be ignored.

In some other embodiments, the terminal selects J receiving spatial hypotheses whose RSRPs are higher than a preset threshold and selects N/J SSBs with the highest RSRP for each receiving spatial hypothesis, where J is a natural number greater than or equal to 1. For example, the terminal first selects two optimal Rx beams and measures the SSBs using the different Rx beams, and an Rx beam with the highest RSRP is selected. In the example shown in Table 1, Rx beam1 yields the highest RSRP when measuring SSB 3, followed by Rx beam2 which yields the second highest RSRP when measuring SSB 4. Therefore, Rx beam1 and Rx beam2 are determined to be selected. For each selected Rx beam, two SSBs with the highest measurement value obtained through the measurement of each selected Rx beam are selected. Thus, for Rx beam1, SSB3 and SSB0 are selected, and for Rx beam2, SSB4 and SSB2 are selected.

Similarly, in some embodiments, among the N SSBs selected through different optimal Rx beams, there may be the SSBs having the same index. For example, if six transceiving beam pairs are selected, SSB6 is selected repeatedly, that is, {Rx beam1, SSB6} and {Rx beam2, SSB6} correspond to the same SSB. In this case, a transceiving beam pair with a lower RSRP may be ignored.

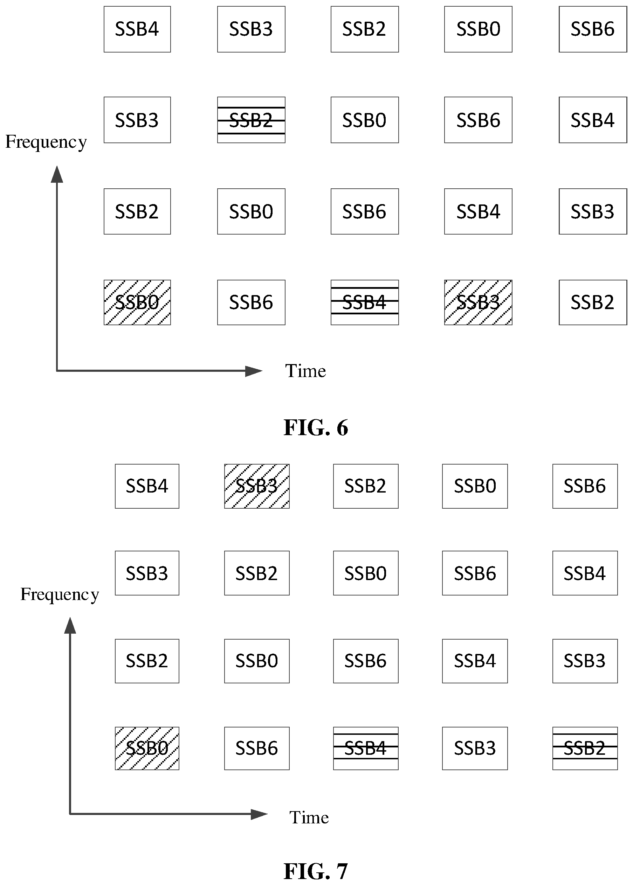

The terminal transmits the PRACHs within the ROs corresponding to the selected SSBs. FIG. 6 is a diagram illustrating RO selection in a service node selection method according to embodiment two of the present application. As shown in FIG. 6, the SSBs actually transmitted (that is, SSB0, SSB2, SSB3, SSB4, and SSB6 in FIG. 5) are cyclically associated with the ROs in the order of frequency domain followed by time domain. In FIG. 6, the horizontal axis represents the time domain, with time increasing from left to right, and the vertical axis represents the frequency domain, with frequency increasing from bottom to top. SSBx in each block in the figure represents an RO corresponding to the received SSBx. The terminal selects one RO associated with each of SSB3, SSB4, SSB0, and SSB2 for transmitting the PRACHs.

In some embodiments, the terminal transmits the same preamble sequence within ROs in which PRACHs are transmitted using the same transmitting spatial filter and transmits different preamble sequences within ROs in which PRACHs are transmitted using different transmitting spatial filters. The terminal transmits the same preamble sequence within ROs corresponding to the same Rx beam. The terminal transmits different preamble sequences within ROs corresponding to different Rx beams. In some embodiments, a predefined association relationship is satisfied between the preamble sequences transmitted within the ROs corresponding to the different Rx beams. For example, the preamble sequences are generated based on the same root sequence with different cyclic shifts, where intervals between the cyclic shifts are predefined.

In some embodiments, only one RO is selected to transmit a PRACH within the same time-domain resource. When RO resources corresponding to the selected multiple SSBs exist within the same time-domain resource, the terminal selects only one RO for transmission. That is, the terminal does not transmit multiple PRACHs using FDM.

When more than one RO corresponding to any SSB of the N SSBs exists within the same time-domain resource, the terminal selects an RO, which corresponds to the any SSB of the N SSBs and has the lowest or highest frequency-domain index, within the same time-domain resource to transmit the PRACHs; or the terminal selects an RO corresponding to an SSB with the smallest index among SSBs corresponding to the multiple ROs to transmit the PRACH; or the terminal selects any RO to transmit the PRACH. For example, in FIG. 6, the multiple ROs corresponding to the selected SSBs (that is, the four ROs corresponding to SSB0, SSB2, SSB3, and SSB4 that are selected) exist within a first time-domain resource. The terminal is required to determine one of these ROs for transmitting the PRACH according to a predefined rule. As an example, the rule is defined that, within the same time-domain resource, among the ROs corresponding to the selected SSBs, the RO with the lowest or highest frequency-domain index is selected; that is, the RO occupying the lowest or highest frequency resource is selected. Therefore, an RO corresponding to SSB0 is determined as an RO resource for transmitting the PRACH. Further, an RO corresponding to another selected SSB is selected. Within a second time-domain resource, there exists one RO corresponding to the remaining selected SSB, that is, an RO corresponding to SSB2. This RO is selected as a second RO resource for transmitting a PRACH. This process is repeated until a corresponding RO is found for each of all the selected SSBs. In FIG. 6, blocks filled with diagonal lines represent ROs selected corresponding to Rx beam1, and blocks filled with vertical lines represent ROs selected corresponding to Rx beam2.

In some embodiments, the preceding RO selection procedure may also be performed for each Rx beam. However, it is still required to satisfy that the selected multiple ROs do not use the FDM; that is, no more than one RO can be selected within the same time-domain resource. FIG. 7 is another diagram illustrating RO selection in a service node selection method according to embodiment two of the present application. As shown in FIG. 7, two SSBs corresponding to Rx beam1, namely SSB0 and SSB3, are first selected. SSB0 and SSB3 are located within a first time-domain resource and a second time-domain resource, respectively. Further, two SSBs corresponding to Rx beam2 are selected, namely SSB2 and SSB4, which are located within a third time-domain resource and a fifth time-domain resource, respectively. In FIG. 7, the horizontal axis represents the time domain, with time increasing from left to right, and the vertical axis represents the frequency domain, with frequency increasing from bottom to top. SSBx in each block in the figure represents an RO corresponding to the received SSBx. In FIG. 7, blocks filled with diagonal lines represent ROs selected corresponding to Rx beam1, and blocks filled with horizontal lines represent ROs selected corresponding to Rx beam2.

In some examples, the multiple ROs occupy the same frequency resource. It is required that the selected ROs occupy the same frequency resource or that ROs corresponding to the same Rx beam occupy the same frequency resource. In this case, after a first RO is selected, ROs corresponding to the remaining selected SSBs are selected on the same frequency-domain resource within subsequent time-domain resources.

In some examples, after the network side receives the PRACHs transmitted by the terminal, APs corresponding to ROs in which the same preamble sequence is received are used as a group of APs serving the terminal. When the UE selects SSBs corresponding to multiple Rx beams, the network side finally determines one group of SSBs corresponding to the same Rx beam as a downlink serve beam and determines APs transmitting these SSBs as a group of network nodes serving the UE. In some examples, after the network side receives the PRACHs transmitted by the terminal, a subset of the group of APs is determined, based on a measurement result of the received preamble sequence, as the group of APs serving the terminal. In some examples, an uplink service node set and a downlink service node set may be different. For example, a set of transmitting APs corresponding to SSBs that are selected by the terminal based on the measurement of the SSBs and correspond to the same Rx beam is defined as the downlink service node set; after receiving the PRACHs transmitted by the terminal, the network side determines another set of APs as the uplink service node set based on the measurement result of the received preamble sequence.

This embodiment describes a method for determining a group of network service nodes based on uplink and downlink measurements. As a result, the terminal can establish links with the multiple network nodes in the initial access stage, thereby forming the network service node set centered on the terminal. Further, the performance of the terminal in the initial access process can be improved.

### Embodiment three

In this embodiment, the terminal receives the M SSBs using the different receiving spatial hypotheses, where the receiving spatial hypotheses are referred to as receiving beams (Rx beams), and one SSB is selected for each Rx beam. The terminal then transmits the PRACHs within one or more corresponding ROs using transmitting spatial filters (transmitting beams) corresponding to the receiving beams.

The terminal receives one or more SSBs using X different receiving beams, and for each Rx beam, selects the one SSB, for example, an SSB with the highest RSRP or an SSB whose RSRP satisfies a threshold. In this case, X measurement results respectively corresponding to different Rx beams can be obtained, the measurement results are sorted in descending order according to measurement values, and first Y Rx beams are selected. The Y Rx beams are used to obtain corresponding transmitting spatial filters (that is, transmitting beams (Tx beams)), and each of the Y Tx beams is used to transmit a PRACH once within ROs corresponding to all the SSBs. The network side compares PRACHs transmitted using different Tx beams and ultimately determines a set of APs serving the UE. Accordingly, a Tx beam of the terminal can also be determined.

The terminal selects J receiving spatial hypotheses whose RSRPs are higher than a preset threshold and determines Q transmitting spatial filters corresponding to the J receiving spatial hypotheses, where Q is a natural number greater than or equal to 1. The terminal transmits the PRACHs within the ROs corresponding to all the SSBs using each of the Q transmitting spatial filters.

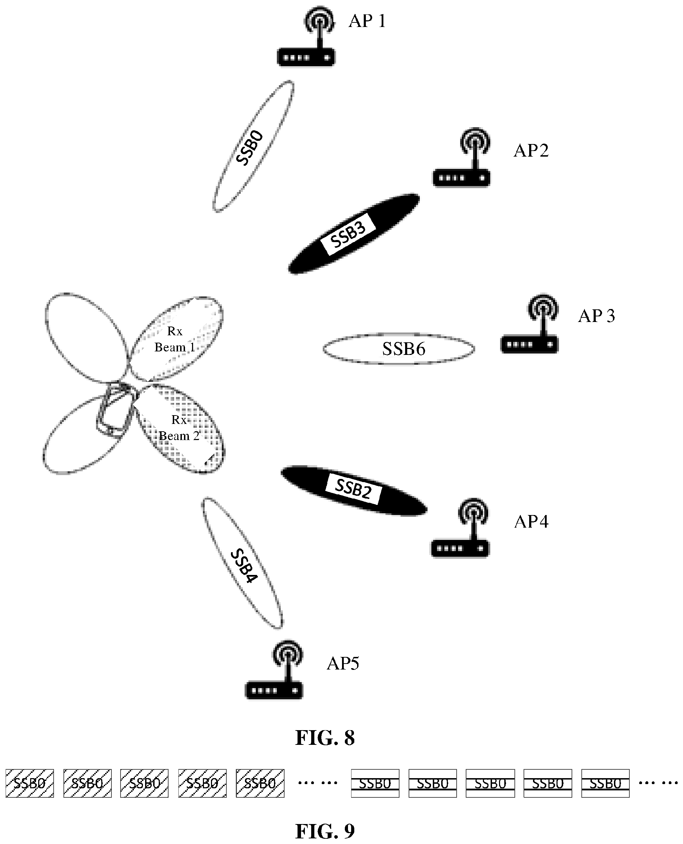

Specifically, as shown in FIG. 8, FIG. 8 is a network diagram illustrating a service node selection method according to embodiment three of the present application. The terminal and five APs, that is, AP1 to AP5, serving as service nodes, are included in FIG. 8. In the cell-free network, the multiple APs are distributed around the terminal, and these APs are the network service nodes each configured with the one or more antennas. These APs transmit the downlink synchronization signals (such as the SSBs shown in the figure) according to the preconfigured resources. Each AP transmits one SSB, multiple APs may jointly transmit one SSB, or one AP may transmit multiple SSBs. FIG. 3 is shown using an example in which each AP transmits one SSB. AP1 transmits SSB0, AP2 transmits SSB3, AP3 transmits SSB6, AP4 transmits SSB2, and AP5 transmits SSB4.

The terminal measures the SSBs using different Rx beams to obtain the maximum value of SSB measurement for each Rx beam and selects two Rx beams with the highest measurement result as selected Rx beams, for example, Rx beam1 and Rx beam2 in FIG. 8. Further, Tx beam1 corresponding to Rx beam1 is used to transmit a PRACH once within an RO corresponding to each SSB. Moreover, Tx beam2 corresponding to Rx beam2 is used to transmit a PRACH once within the RO corresponding to each SSB. As shown in FIG. 9, FIG. 9 is a diagram illustrating RO selection in a service node selection method according to embodiment three of the present application. In FIG. 9, blocks filled with diagonal lines represent ROs selected corresponding to Rx beam1, and blocks filled with horizontal lines represent ROs selected corresponding to Rx beam2.

The network side can aggregate the receiving performances of the different Tx beams and determine one of the Tx beams as the Tx beam of the terminal. Corresponding to this Tx beam, the network side can further determine which APs are suitable for receiving uplink information transmitted by the Tx beam, thereby determining a group of network nodes serving the terminal.

In some examples, it is required that the selected ROs occupy the same frequency resource or that ROs corresponding to the same Rx beam occupy the same frequency resource. In this case, after a first RO is selected, ROs corresponding to the remaining selected SSBs are selected on the same frequency-domain resource within subsequent time-domain resources. In some examples, after the network side receives the PRACHs transmitted by the terminal, APs corresponding to ROs in which the same preamble sequence is received are used as a group of APs serving the terminal. When the UE selects SSBs corresponding to multiple Rx beams, the network side finally determines one group of SSBs corresponding to the same Rx beam as a downlink serve beam and determines APs transmitting these SSBs as a group of network nodes serving the UE. In some examples, after the network side receives the PRACHs transmitted by the terminal, a subset of the group of APs is determined, based on a measurement result of the received preamble sequence, as the group of APs serving the terminal. In some examples, an uplink service node set and a downlink service node set may be different. For example, a set of transmitting APs corresponding to SSBs that are selected by the terminal based on the measurement of the SSBs and correspond to the same Rx beam is defined as the downlink service node set; after receiving the PRACHs transmitted by the terminal, the network side determines another set of APs as the uplink service node set based on the measurement result of the received preamble sequence.

This embodiment describes a method for determining a group of network service nodes based on uplink and downlink measurements. As a result, the terminal can establish links with the multiple network nodes in the initial access stage, thereby forming the network service node set centered on the terminal. Further, the performance of the terminal in the initial access process can be improved.

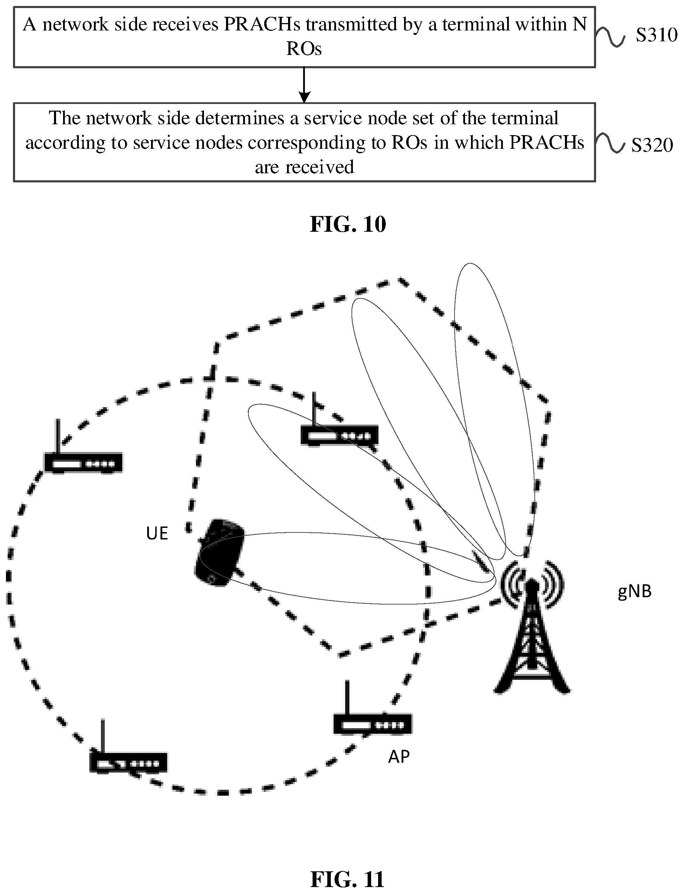

FIG. 10 is another flowchart of a service node selection method according to an embodiment of the present application. As shown in FIG. 10, the service node selection method provided in this embodiment includes the following.

In S310, a network side receives PRACHs transmitted by a terminal within N ROs.

The service node selection method provided in this embodiment is used by the network side to determine a serve node set of the terminal accessing the cell-free network. In this embodiment, the network side refers to a device or network node in the network that is used to configure and manage access parameters of the terminal. In the random access process, the terminal transmits the PRACHs to neighboring service nodes. After receiving the PRACHs transmitted by the terminal, the service nodes notify a network-side device on the network side that configures and manages the access of the terminal. In the cell-free network, after transmitting the PRACHs within the N ROs, the terminal can access the network through the multiple service nodes that receive the PRACHs, thereby achieving the access of the multiple service nodes in the random access process. Therefore, the network side can receive the PRACHs transmitted by the terminal within the N ROs. The service nodes may be APs or other service nodes capable of providing terminal access, and the embodiments of the present application are illustrated using an example in which the APs are used as the service nodes.

In S320, the network side determines a service node set of the terminal according to service nodes corresponding to ROs in which PRACHs are received.

After the terminal transmits the PRACHs within the multiple ROs, multiple service nodes receive the PRACHs transmitted by the terminal. The service nodes that receive the PRACHs are able to continue a random access procedure with the terminal so that the terminal can establish connections with the multiple service nodes in the initial access stage, thereby enabling the terminal to directly access the cell-free network in the access process. Since the ROs are selected based on SSBs, and the SSBs are received by the terminal from the multiple service nodes, the ROs determined by the terminal for transmitting the PRACHs have a correspondence relationship with the service nodes that transmit the SSBs. Therefore, determining the ROs by the terminal for transmitting the PRACHs actually determines the service nodes the terminal accesses. Therefore, the network side determines the service node set of the terminal according to the service nodes corresponding to the ROs in which the PRACHs are received.

In an embodiment, the network side uses a service node set corresponding to ROs in which PRACHs are received and the same preamble sequence is transmitted as the service node set of the terminal; or the network side uses a subset of a service node set corresponding to ROs in which PRACHs are received and the same preamble sequence is transmitted as the service node set of the terminal.

The service node selection method provided in this embodiment is performed in cooperation with the service node selection method in the embodiments shown in FIGS. 2 to 9 to achieve the service node selection. The specific implementation manner and technical effects may be referred to the embodiments shown in FIGS. 2 to 9, and details are not repeated herein.

### Embodiment four

An embodiment of the present application further provides another method for determining a group of service nodes based on uplink and downlink measurements.

On-demand System Information is required to be transmitted based on a request of the UE (that is, a PRACH transmission with a specific sequence). When the network side decides to start transmitting a certain type of System Information, the System Information is transmitted using beams of all SSBs over the entire cell coverage. However, in the cell-free network, it is necessary to determine the scope for transmitting the System Information (that is, through which nodes or which beams the requested System Information is transmitted), and it is assumed that the request of the UE is still initiated based on SSBs transmitted by a legacy gNB/AP.

Specifically, FIG. 11 is a network diagram illustrating a service node selection method according to embodiment four of the present application. FIG. 11 illustrates a process in which the UE requests the transmission of the System Information (SI), and the network side determines the scope for transmitting the SI. A gNB, the UE, and multiple Aps are included in FIG. 11. The process is performed according to the following steps.

In S1, the gNB transmits an SSB and a System Information Block (SIB) 1 (including SI request configuration information).

In S2, the UE transmits SI corresponding to a PRACH request; moreover, some pieces of measurement information are optionally fed back, for example, RSRP of one or more SSBs; N groups of PRACH resources and N - 1 RSRP thresholds may be defined, and a mapping relationship between the PRACH resources and "a relationship between measurement results and the RSRP thresholds" may be defined. Further, the terminal may compare the measurement results with the RSRP thresholds to determine the relationship between the measurement results and the thresholds and select corresponding PRACH resources. Specifically, when N = 2, only one RSRP threshold is required to be configured. When a measured RSRP is lower than or not higher than the threshold, PRACH resources within group 1 are selected; when the measurement result is not lower than or higher than the threshold, PRACH resources within group 2 are selected.

In S3, based on the some pieces of measurement information, the gNB may determine whether the SI is transmitted by the gNB or by selecting an AP group. For example, when the UE is located at the edge of a cell, the RSRP measurement result is usually low, for example, lower than the threshold. In this case, transmitting the System Information by a base station of a cellular cell may result in poor performance. Therefore, the network side may select transmission of the System Information through the cell-free network. Further, the selection of the PRACH resources by the terminal is equivalent to requesting cell-free service.

In S4, when it is determined that the SI is transmitted by the AP group, time-frequency resources of the SI are indicated to the UE, or transmission resources of the SI are determined according to a predefined rule. For example, a monitoring configuration of an SI PDCCH is configured by SIB1, and a related configuration may also be shared by two modes (a cellular network and a cell-free network). However, the UE is required to further determine a receiving spatial filter (receiving beam) and receiving timing when receiving the SI. In this case, before transmitting the SI, the AP group may transmit some downlink reference signals in advance, and based on these, the terminal can determine the receiving beam and the receiving timing.

This embodiment describes the method for determining a group of network service nodes based on the uplink and downlink measurements. As a result, the terminal can establish links with multiple network nodes in the initial access stage, thereby forming a network service node set centered on the terminal. Further, the performance of the terminal in the initial access process can be improved.

The present application describes multiple methods for determining a group of network service nodes based on uplink and downlink measurements. Specifically, the group of network service nodes is determined based on the measurement and feedback of the multiple downlink synchronization signals by the terminal and the measurement performed by the network side on feedback signals transmitted by the terminal. Similar methods are also applicable to node selection when the terminal requests the transmission of the System Information. Through the preceding methods, the terminal can establish the links with the multiple network nodes in the initial access stage, thereby forming the network service node set centered on the terminal. Further, the performance of the terminal in the initial access process can be improved.

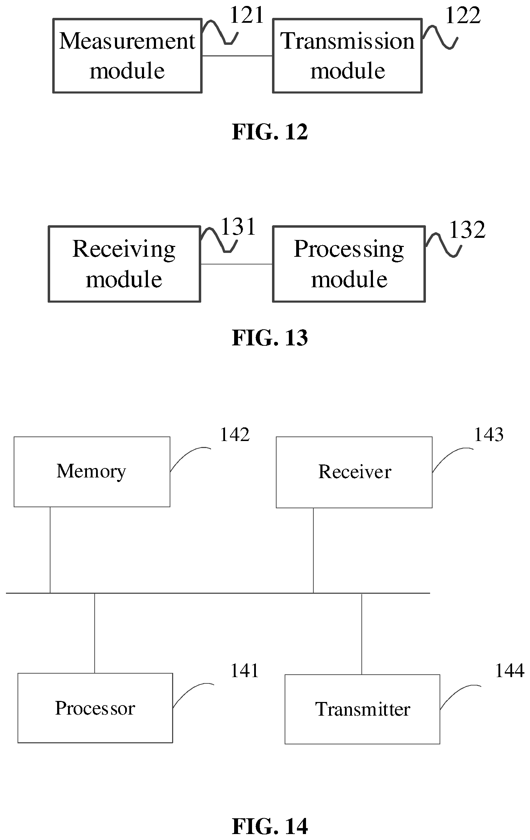

FIG. 12 is a diagram illustrating the structure of a service node selection apparatus according to an embodiment of the present application. As shown in FIG. 12, the service node selection apparatus provided in this embodiment includes the following.

A measurement module 121 is configured to select N SSBs based on a measurement of SSBs, where N is a natural number greater than or equal to 1. A transmission module 122 is configured to transmit, based on the selected N SSBs, PRACHs within multiple ROs corresponding to the N SSBs.

The service node selection apparatus provided in this embodiment is configured at a terminal and is configured to perform the service node selection method of the embodiment shown in FIG. 2. The implementation principles and technical effects of the service node selection apparatus are similar to those of the service node selection method. The details are not repeated herein.

FIG. 13 is a diagram illustrating the structure of a service node selection apparatus according to an embodiment of the present application. As shown in FIG. 13, the service node selection apparatus provided in this embodiment includes the following.

A receiving module 131 is configured to receive PRACHs transmitted by a terminal within N ROs. A processing module 132 is configured to determine a service node set of the terminal according to service nodes corresponding to ROs in which PRACHs are received.

The service node selection apparatus provided in this embodiment is configured on a network side and is configured to perform the service node selection method of the embodiment shown in FIG. 10. The implementation principles and technical effects of the service node selection apparatus are similar to those of the service node selection method. The details are not repeated herein.

FIG. 14 is a diagram illustrating the structure of a service node selection device according to an embodiment of the present application. As shown in FIG. 14, the service node selection device includes a processor 141, a memory 142, a receiver 143, and a transmitter 144. One or more processors 141 may be provided in the service node selection device, and one processor 141 is used as an example in FIG. 14. The processor 141, the memory 142, the receiver 143, and the transmitter 144 in the service node selection device may be connected through a bus or in other manners. In FIG. 14, the connection through the bus is used as an example.

As a computer-readable storage medium, the memory 142 is configured to store software programs, computer-executable programs, and modules, for example, program instructions/modules (the measurement module 121 and the transmission module 122) corresponding to the service node selection method of the embodiment shown in FIG. 2 of the present application. The processor 141 is configured to execute the software programs, instructions, and modules stored in the memory 142 to perform various functions and data processing of the service node selection device, that is, to perform the preceding service node selection method.

The memory 142 may mainly include a program storage region and a data storage region, where the program storage region may store an operating system and an application program required by at least one function, and the data storage region may store data created according to the use of the service node selection device. Additionally, the memory 142 may include a high-speed random-access memory and may also include a nonvolatile memory, such as at least one magnetic disk memory, a flash memory, or another nonvolatile solid-state memory.

The receiver 143 is any device/module having a data receiving capability or a combination of multiple devices/modules having the data receiving capability. The transmitter 144 is any device/module having a data transmitting capability or a combination of multiple devices/modules having the data transmitting capability.

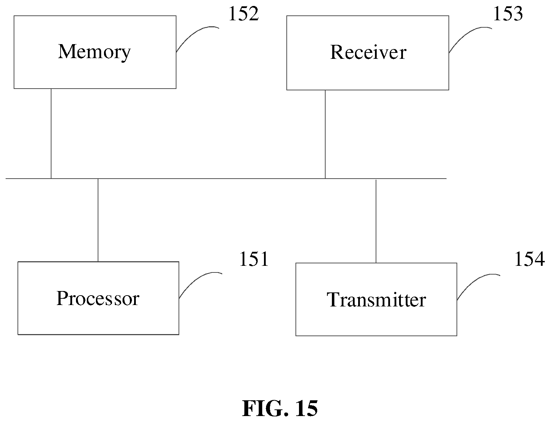

FIG. 15 is a diagram illustrating the structure of a service node selection device according to an embodiment of the present application. As shown in FIG. 15, the service node selection device includes a processor 151, a memory 152, a receiver 153, and a transmitter 154. One or more processors 151 may be provided in the service node selection device, and one processor 151 is used as an example in FIG. 15. The processor 151, the memory 152, the receiver 153, and the transmitter 154 in the service node selection device may be connected through a bus or in other manners. In FIG. 15, the connection through the bus is used as an example.

As a computer-readable storage medium, the memory 152 is configured to store software programs, computer-executable programs, and modules, for example, program instructions/modules (the receiving module 131 and the processing module 132) corresponding to the service node selection method of the embodiment shown in FIG. 10 of the present application. The processor 151 is configured to execute the software programs, instructions, and modules stored in the memory 152 to perform various functions and data processing of the service node selection device, that is, to perform the preceding service node selection method.

The memory 152 may mainly include a program storage region and a data storage region, where the program storage region may store an operating system and an application program required by at least one function, and the data storage region may store data created according to the use of the service node selection device. Additionally, the memory 152 may include a high-speed random-access memory and may also include a nonvolatile memory, such as at least one magnetic disk memory, a flash memory, or another nonvolatile solid-state memory.

The receiver 153 is any device/module having a data receiving capability or a combination of multiple devices/modules having the data receiving capability. The transmitter 154 is any device/module having a data transmitting capability or a combination of multiple devices/modules having the data transmitting capability.

An embodiment of the present application further provides a storage medium including computer-executable instructions which, when executed by a computer processor, are configured to cause the computer processor to perform a service node selection method. The method includes: selecting, by a terminal, N SSBs based on the measurement of SSBs, where N is a natural number greater than or equal to 1; and transmitting, by the terminal, PRACHs within multiple corresponding ROs based on the selected N SSBs.

An embodiment of the present application further provides a storage medium including computer-executable instructions which, when executed by a computer processor, are configured to cause the computer processor to perform a service node selection method. The method includes: receiving, by a network side, physical random access channels (PRACH) transmitted by a terminal within N ROs; and determining, by the network side, a service node set of the terminal according to service nodes corresponding to the ROs in which the PRACHs are received.

## Claims

1. A service node selection method, comprising:
selecting, by a terminal, N synchronization signal/physical broadcast channel blocks (SSBs) based on a measurement of SSBs, wherein N is a natural number greater than or equal to 1; and
transmitting, by the terminal and based on the selected N SSBs, physical random access channels (PRACHs) within a plurality of random access channel occasions (ROs) corresponding to the N SSBs.

2. The method according to claim 1, before selecting, by the terminal, the N SSBs based on the measurement of the SSBs, further comprising:
receiving, by the terminal, M SSBs through L receiving spatial hypotheses, wherein L is a natural number greater than or equal to 1, and M is a natural number greater than or equal to N.

3. The method according to claim 2, wherein transmitting, by the terminal and based on the selected N SSBs, the PRACHs within the plurality of ROs corresponding to the N SSBs comprises:
determining, by the terminal, K receiving spatial hypotheses of the L receiving spatial hypotheses corresponding to the N SSBs and determining, by the terminal, P transmitting spatial filters corresponding to the K receiving spatial hypotheses, wherein K is a natural number greater than or equal to 1 and less than or equal to L, and P is a natural number greater than or equal to 1; and
transmitting, by the terminal, the PRACHs within the plurality of ROs corresponding to the N SSBs using the P transmitting spatial filters, respectively.

4. The method according to claim 3, wherein receiving, by the terminal, the M SSBs through the L receiving spatial hypotheses comprises:
receiving, by the terminal, the M SSBs using a same receiving spatial hypothesis of the L receiving spatial hypotheses.

5. The method according to claim 4, wherein selecting, by the terminal, the N SSBs based on the measurement of the SSBs comprises:
selecting, by the terminal, the N SSBs from the received M SSBs, wherein the N SSBs are N SSBs with a highest reference signal received power (RSRP) among the M SSBs or N SSBs whose RSRPs are higher than a preset threshold among the M SSBs.

6. The method according to any one of claims 3 to 5, wherein the terminal transmits the PRACHs with a same preamble sequence within the plurality of ROs, respectively.

7. The method according to claim 6, wherein transmitting, by the terminal, the PRACHs within the plurality of ROs respectively comprises: selecting, by the terminal, only one RO within a same time-domain resource to transmit a PRACH.

8. The method according to claim 7, wherein in a case where a plurality of ROs corresponding to any SSB of the N SSBs exist within the same time-domain resource, the terminal selects an RO, which corresponds to the any SSB of the N SSBs and has a lowest or highest frequency-domain index, within the same time-domain resource to transmit the PRACH, or the terminal selects an RO corresponding to an SSB with a smallest index among a plurality of SSBs corresponding to the plurality of ROs to transmit the PRACH.

9. The method according to any one of claims 3 to 5, wherein the plurality of ROs occupy a same frequency resource.

10. The method according to claim 3, wherein receiving, by the terminal, the M SSBs through the L receiving spatial hypotheses comprises:
receiving, by the terminal, the M SSBs through different receiving spatial hypotheses of the L receiving spatial hypotheses, wherein each receiving spatial hypothesis of the different receiving spatial hypotheses receives at least one SSB.

11. The method according to claim 10, wherein selecting, by the terminal, the N SSBs based on the measurement of the SSBs comprises:
selecting, by the terminal, N receiving spatial hypothesis-transmitting spatial filter pairs, wherein each receiving spatial hypothesis-transmitting spatial filter pair of the N receiving spatial hypothesis-transmitting spatial filter pairs comprises one SSB and a receiving spatial hypothesis corresponding to the SSB, and SSBs in the N receiving spatial hypothesis-transmitting spatial filter pairs are N SSBs with a highest RSRP among the M SSBs or are N SSBs whose RSRPs are higher than a preset threshold among the M SSBs.

12. The method according to claim 11, wherein among the N receiving spatial hypothesis-transmitting spatial filter pairs, for SSBs having a same index, a receiving spatial hypothesis-transmitting spatial filter pair corresponding to an SSB with a lower RSRP is ignored.

13. The method according to claim 10, wherein the terminal selects J receiving spatial hypotheses of the L receiving spatial hypotheses whose RSRPs are higher than a preset threshold and selects N/J SSBs with a highest RSRP for each receiving spatial hypothesis of the J receiving spatial hypotheses, wherein J is a natural number greater than or equal to 1.

14. The method according to any one of claims 10 to 13, wherein the terminal transmits a same preamble sequence within ROs of the plurality of ROs in which PRACHs are transmitted using a same transmitting spatial filter of the P transmitting spatial filters and transmits different preamble sequences within ROs of the plurality of ROs in which PRACHs are transmitted using different transmitting spatial filters of the P transmitting spatial filters.

15. The method according to any one of claims 10 to 13, wherein transmitting, by the terminal, the PRACHs within the plurality of ROs respectively comprises: selecting, by the terminal, only one RO within a same time-domain resource to transmit a PRACH.

16. The method according to claim 15, wherein in a case where a plurality of ROs corresponding to any SSB of the N SSBs exists within the same time-domain resource, the terminal selects an RO, which corresponds to the any SSB of the N SSBs and has a lowest or highest frequency-domain index, within the same time-domain resource to transmit the PRACH, or the terminal selects an RO corresponding to an SSB with a smallest index among a plurality of SSBs corresponding to the plurality of ROs to transmit the PRACH.

17. The method according to any one of claims 10 to 13, wherein the plurality of ROs occupy a same frequency resource.

18. The method according to claim 11, wherein the terminal selects J receiving spatial hypotheses of the L receiving spatial hypotheses whose RSRPs are higher than a preset threshold and determines Q transmitting spatial filters corresponding to the J receiving spatial hypotheses, wherein Q is a natural number greater than or equal to 1; and
the terminal transmits the PRACHs on ROs corresponding to all the SSBs through each transmitting spatial filter of the Q transmitting spatial filters.

19. A service node selection method, comprising:
receiving, by a network side, physical random access channels (PRACHs) transmitted by a terminal within N random access channel occasions (ROs); and
determining, by the network side, a service node set of the terminal according to service nodes corresponding to ROs in which PRACHs are received.

20. The method according to claim 19, wherein determining, by the network side, the service node set of the terminal according to the service nodes corresponding to ROs in which PRACHs are received comprises:
using, by the network side, a service node set corresponding to ROs in which PRACHs are received and a same preamble sequence is transmitted as the service node set of the terminal; or
using, by the network side, a subset of a service node set corresponding to ROs in which PRACHs are received and a same preamble sequence is transmitted as the service node set of the terminal.

21. A service node selection apparatus, configured at a terminal and comprising:
a measurement module, configured to select N synchronization signal/physical broadcast channel blocks (SSBs) based on a measurement of SSBs, wherein N is a natural number greater than or equal to 1; and
a transmission module, configured to transmit, based on the selected N SSBs, physical random access channels (PRACHs) within a plurality of RACH occasions (ROs) corresponding to the N SSBs.

22. A service node selection apparatus, configured on a network side and comprising:
a receiving module, configured to receive physical random access channels (PRACHs) transmitted by a terminal within N RACH occasions (ROs); and
a processing module, configured to determine a service node set of the terminal according to service nodes corresponding to ROs in which PRACHs are received.

23. A service node selection device, comprising:
a memory configured to store a program; and
a processor configured to execute the program which, when executed by the processor, causes the processor to perform the service node selection method according to any one of claims 1 to 18.

24. A service node selection device, comprising:
a memory configured to store a program; and
a processor configured to execute the program which, when executed by the processor, causes the processor to perform the service node selection method according to any one of claims 19 to 20.

25. A non-transitory storage medium, comprising a stored program which, when executed, causes the service node selection method according to any one of claims 1 to 18 or 19 to 20 to be performed.
